**Europäisches Patentamt**

**European Patent Office**

**Office européen des brevets**

(11) Publication number: **0 060 642**
**A1**

(12) **EUROPEAN PATENT APPLICATION**

(21) Application number: **82301034.3**

(22) Date of filing: **01.03.82**

(51) Int. Cl.³: **H 01 M 10/42, H 01 M 10/06**

(30) Priority: **06.03.81 US 241088**

(43) Date of publication of application: **22.09.82**
**Bulletin 82/38**

(84) Designated Contracting States: **BE GB NL SE**

(71) Applicant: **ESB INTERNATIONAL CORPORATION,
2625 Concord Pike, Wilmington Delaware 19803 (US)**

(72) Inventor: **Werth, John, 204 Bertrad Drive, Princeton,
N.J. 08540 (US)**

(74) Representative: **Lockwood, Barbara Ann et al, Thames
House (Fifth Floor) Millbank, London SW1P 4QF (GB)**

(54) **Third electrode for lead-acid standby batteries.**

(57) An auxiliary platinum or palladium electrode is provided for a lead-acid standby battery in float service to depolarise the negative electrode and allow the positive electrode to reach full charge.

EP 0 060 642 A1

## Third Electrode for Lead-Acid Standby Batteries

The present invention relates to lead-acid standby batteries, and in particular to means for improving their float polarisation characteristics.

An important application for lead-acid industrial batteries is in standby service to ensure an uninterrupted current supply for the operation of control and protective equipment as well as for signal operations, emergency lighting, circuit-breaker control, computer power supply, and other similar applications. In standby service the batteries are continuously connected to a bus from the primary power supply, with the voltage of the charging line being slightly greater than the open-circuit voltage of the battery and opposite in polarity. Such batteries are seldom required to discharge much of their capacity and they are maintained in a charged condition by "floating" across a voltage-controlled circuit having a voltage which is normally in the range 2.14 to 2.18 volts per cell.

Batteries on float must be capable of delivering full capacity discharge at any time, and because they are so expensive they must be able to be utilised in float service for some years.

It is important that cells used on standby duty operate within the proper range of float polarisation voltages at both the positive and negative plates. If the positive polarisation voltage is too low, the cell will not hold its charge; if it is too high, the positive may corrode. If the negative polarisation is too high (usually due to hydrogen gas retention in the pores), not enough voltage is available for the positive polarisation, and the cell will lose its charge. If the negative polarisation is too low, the positive polarisation may be too high; and the positive may corrode.    If too much gas gets trapped in the pores of the negative and cannot escape, the ability to deliver a large current on emergency discharge will be impaired.

Some manufacturers have introduced a platinum salt into the electrolyte of float service batteries in order to improve uneven float polarisation voltages. Although this solution has been reported to be effective it is an irreversible step which could cause problems in long service, and also it does not act fast enough when applied to batteries which are already in service.

The present invention is based on the discovery that by use of an auxiliary electrode in the cell a simple, effective and reversible solution to the problem of uneven float polarisation voltages is achieved.

According to the present invention, a lead-acid cell for use on float service comprises at least one positive plate, and at least one negative plate immersed in electrolyte and characterised in that an auxiliary platinum or palladium depolarising electrode is electrically connected to the negative plate and immersed in the cell electrolyte whereby when the cell is used in float service hydrogen is evolved from the auxiliary electrode and thereby increases the float current and allows the positive electrode to reach full charge.

The auxiliary electrode is normally a small foil of platinum or palladium and advantageously has a finely divided, activated surface. e.g. platinised platinum.    The auxiliary electrode is preferably connected to the negative plate via a variable resistor. The auxiliary electrode acts essentially as a negative plate depolariser and hence its area is not critical and may be varied over wide limits while retaining the same function.    Auxiliary electrodes may have an area as low as 1 mm² but could be 200 mm² (2 square cm.) or even up to 1000 mm² (10 square cm.). The electrode may have a thickness as low as 0.0254 mm. Cost factors of course favour small thin auxiliary electrodes. The auxiliary electrode may consist of platinum or palladium coated on to an inexpensive substrate, such as for example cadmium foil.

In use the auxiliary electrode device draws a small parasitic current from the negative plate, evolving a commensurate amount of hydrogen at the surface of the platinum or palladium. This increases the float current at any voltage by an amount roughly equal to the parasitic current. That, in turn, allows the positive to catch up with the negative and to reach full charge regardless of how far the capacity of the positive may have fallen below that of the negative. The device thus allows the positive to reach full charge while the cells are on float service, instead of before. As the positive generates more oxygen due to the higher float current, and as most or all of the hydrogen gas evolves on the auxiliary electrode instead of within the pores of the negative, the bubbles trapped in the negative can escape, allowing for a high-rate discharge when needed. The optional variable resistor allows the parasitic current to be adjusted to any value from zero to about 200 mA and allows freedom for the positive and negative polarisations to be apportioned as is desired. The platinum electrode technique avoids the irreversible aspects and possible future troubles of platinum-dosing an entire cell. Its controllability provides flexibility and insurance against future mismatches between cells. The fact that it allows cells to be immediately floated removes the competitive disadvantage of the pre-charge method.

The parasitic current allows a relatively large float current to charge the positive and to keep its polarisation at the desired levels.   At the same time, only part of the float current flows through the negative plates; the rest flows through the auxiliary electrode.The net result is that practically all of the negative plate current is oxygen-supported.   The hydrogen evolution current is almost entirely localised at the auxiliary electrode.Thus hydrogen bubbles are prevented from clogging the negative and reducing its high-rate discharge capability.

The use of a series resistor allows for the adjustment of cells which deviate from the optimum apportionment between negative and positive polarisation, but if production cells are uniform the resistor may be left out.   If at some time in the future some better solution becomes available the auxiliary electrode may of course be readily removed from the cell.

The auxiliary electrode is readily placed in the cell.   Where there is no resistor, a suitable holder for the auxiliary electrode can be supported by a cap, plug or lid on the cell.   For example the auxiliary electrode may be mounted in a lead holder, for example of wire or strip, and this could be supported by the cap which fits over the tube hole for withdrawal of the negative electrode.   The other end of the lead holder is in contact with the negative strap or some other part of the negative electrode.   When a resistor is used it may be encapsulated in polymer and may also be kept under the cover of the cell.   One side of the resistor goes to a lead wire in contact with the negative and the other may hang in the electrolyte and hold the auxiliary electrode submerged.   This device may also have an external connection to the negative post.

An example will now be described.

## EXAMPLE

A cell which had become imbalanced in float service was found to have low positive and high negative polarisation with development of sulphate crystals at the positive.  The positive plate was 30.48 cm high, 35.56 cm wide and 0.635 cm thick.  An overnight charge still left crystals at the positive but the electrolyte level rose about 1.27 cm due to hydrogen bubbles retained in the pores of the negative.  A 1 mm² platinum foil was inserted into the cell through the hole provided for the negative withdrawal tube and was connected by a lead wire to the negative through a trim-pot.  The resulting parasitic current was measured with a milli-ammeter and the trim-pot was used to limit the current. The negative and positive polarisations were instantly reapportioned, with the positive rising to about 50 mV and the negative falling to about 60 mV.  The float voltage was fixed at 2.17 volts.  The parasitic current was set initially at 100 mA, but was later raised to about 200 mA.  Positive polarisation moved to 72 mV and negative polarisation to 38 mV, with a decrease in the number of crystals at the positive and a steady fall in the electrolyte level over five days, indicating early full charge of the positive and freedom of the negative from hydrogen gas bubbles.

Claims

1.      A lead-acid cell for use on float service comprising at least one positive plate and at least one negative plate immersed in an electrolyte and characterised in that an auxiliary platinum or palladium electrode is electrically connected to the negative plate and immersed in the cell electrolyte whereby when the cell is used in float service hydrogen is evolved from the auxiliary electrode and thereby increases the float current and allows the positive electrode to reach full charge.

2.      A cell as claimed in claim 1 in which the auxiliary electrode is a platinum or palladium foil.

3.      A cell as claimed inclaim 1 in which the auxiliary electrode consists of a substrate with a platinum or palladium coating on the surface.

4.      A cell as claimed in any preceding claim in which the auxiliary electrode has a finely divided activated surface.

5.      A cell as claimed in any preceding claim in which a resistor is connected between the auxiliary electrode and the negative plate.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | FR-A-2 358 755 (ETAT D'ISRAEL) *Page 2; page 14; claim 1* | 1 | H 01 M 10/42<br>H 01 M 10/06 |
| | --- | | |
| A | FR-A-2 160 543 (MATSUSHITA) *Page 6, lines 15-30* | 1,5 | |
| | --- | | |
| A | DE-A-2 809 236 (LAVRENOV) *Page 11; page 13; page 14; paragraph 1* | 1 | |
| | --- | | |
| A | FR-A-2 287 113 (VARTA) | | |
| | ----- | | |

TECHNICAL FIELDS
SEARCHED (Int. Cl. 3)

H 01 M

The present search report has been drawn up for all claims

| Place of search THE HAGUE | Date of completion of the search 06-07-1982 | Examiner DE VOS L.A.R. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82